# EUROPEAN PATENT SPECIFICATION

(11) **EP 3 833 569 B1**
(45) Date of publication and mention of the grant of the patent: **24.11.2021**
(21) Application number: 19780403.2
(22) Date of filing: 06.09.2019
(51) Int. Cl.: B60N 2/58, B60N 2/60, B60N 2/16

(54) **VEHICLE SEAT**
FAHRZEUGSITZ
SIÈGE DE VÉHICULE

(30) Priority: 14.09.2018 FR 1871044
(43) Date of publication of application: 16.06.2021
(73) Proprietor: Martur France Automotive Seating and Interiors Sarl, 92500 Rueil-Malmaison (FR)
(72) Inventor: PEREZ, Jean Claude, 92500 RUEIL-MALMAISON (FR); LOPES, Paul, 92500 RUEIL-MALMAISON (FR); LORME, Fabrice, 92500 RUEIL-MALMAISON (FR)
(74) Representative: Robba, Pierpaolo
(86) International application number: PCT/IB2019/057530
(87) International publication number: WO 2020/053722

(56) References cited:
- JP-A- H06 247 201
- JP-A- 2013 226 932
- US-A- 4 973 105

## Description

### Technical Field

The present invention relates to a vehicle seat.

More particularly, the present invention relates to a vehicle seat which is provided at least with a height adjusting assembly for adjusting the distance of the bottom of the vehicle seat from a vehicle floor.

### Background Art

In order to improve users' comfort, vehicle seats generally have a sliding function for pushing or pulling the seat cushion in a forward or backward direction, a height adjusting function for adjusting the height of the seat cushion from the vehicle floor and a reclining function for adjusting the inclination of the seat backrest relative to the seat cushion.

The aforesaid sliding function and height adjusting function are generally implemented by corresponding assemblies which are at least partially arranged below the bottom of the vehicle seat.

Such assemblies may include mechanical or electric devices which usually comprise several metallic components.

In order to obtain a pleasant appearance for the vehicle seat, such metallic components of these assemblies should not be strikingly visible from the outside. Analogously, also the metallic components of the vehicle seat itself (such as the frame of the vehicle seat cushion) should not be strikingly visible from the outside.

A possible solution to such problem is to paint such metallic components with a black paint.

However, such solution turns out to be unsatisfactory: first of all, the metallic components remain visible on a closer inspection; secondly, the paint may become chipped over time, thus partially revealing the original color of the metallic components, which results in a poor, unpleasant appearance; thirdly, such solution entails an additional step in the manufacturing process of the above-mentioned components, which makes such manufacturing process more complex and expensive.

A further solution to the aforesaid problem is to hide the above-mentioned assemblies (or at least the metallic components thereof) as well as the other metallic components of the vehicle seat cushion beneath a shielding element made of a rigid material, such as a rigid plastic material.

Such solution may be considered as acceptable for the components of the sliding assembly, which have a limited height above the vehicle floor. However, it cannot be satisfactorily applied to the components of the height adjusting assembly: in order to hide such metallic components for any position of the vehicle seat (namely, even when the vehicle seat is in its uppermost position), the shielding element should be very high, which would result in an increase of the manufacturing costs and in a poor, unpleasant appearance of the vehicle seat.

In order to provide a solution adapted to effectively hide the metallic components of the height adjusting assembly, covering elements have been developed which comprise a bellows extending from the vehicle floor to the periphery of the bottom of the vehicle seat.

The height adjusting assembly is arranged inside the bellows, which can move from a completely folded configuration when the vehicle seat is in its lowermost position to a completely unfolded configuration when the vehicle seat is in its uppermost position, thus hiding said height adjusting assembly at any position of the vehicle seat.

Such covering elements are disclosed, for instance, in documents DE 19845011, JPS 62-156038 and CN 205800857.

However, covering elements of the kind disclosed in the aforesaid documents are not free from drawbacks.

First of all, use of such covering elements entails a certain space requirement (namely in a direction transverse to the longitudinal axis of the vehicle seat) when they are in the folded configuration.

Secondly, the structure of such covering elements is quite complex and their manufacturing costs are not negligible.

Thirdly, dust and dirt can accumulate between the folds of such covering elements.

Fourthly, the risk for such covering elements to be torn during unfolding cannot be excluded.

Rather than a bellows surrounding the whole vehicle seat, US 2016/0280108 discloses a covering element arranged on at least one side of the vehicle seat, which covering element comprises a body in which pre-formed folding lines are provided, so that such covering element can move from a folded configuration to an unfolded configuration for concealing the height adjusting assembly of the vehicle seat as the height of the vehicle seat is adjusted.

However, such solution substantially has the same drawbacks as the bellows disclosed in the above-cited documents, namely with reference to space requirement, complexity, accumulation of dust and dirt and risk of tearing.

US 4973105 discloses a seat cushion for a vehicle seat which includes an additional rigid frame extending downwardly from the seat cushion and a covering element arranged between the seat cushion and said additional frame, whereby the covering element can conceal a height adjusting assembly arranged below the bottom of the seat cushion.

However, the provision of an additional frame makes such solution extremely complex and expensive. Moreover, additional room has to be provided for accommodating the downwardly extending additional frame when the seat cushion is in its lowermost position.

JP H06247201 and JP 2013-226932 discloses a combination of a rigid shielding element and a soft flexible element arranged on one side of a vehicle seat.

The main object of the present invention is to alleviate or eliminate the drawbacks of the above-discussed prior solutions.

Namely, the main object of the present invention is to provide a vehicle seat provided with a covering element for hiding the components of the functional assemblies arranged below the bottom of vehicle seat, which covering element has a simple structure and a reliable operation.

A further object of the present invention is to provide a vehicle seat provided with a covering element which is arranged to hide also the other metallic components arranged below the bottom of vehicle seat, as well as the cushion frame.

These and other objects are achieved by the vehicle seat as claimed in the appended claims.

### Summary of Invention

In a per se known manner, the vehicle seat according to the invention comprises a seat cushion, which, in turn, comprises a cushion frame, a cushion foam member mounted to the cushion frame, and a cushion cover stretched over the cushion foam member and fastened to the periphery of the cushion frame.

The cushion frame is configured to be mounted to the vehicle floor of a vehicle. More particularly, the cushion frame is configured to be mounted to a vehicle floor with the interposition of a height adjusting assembly and, optionally, of a sliding assembly that are arranged between the vehicle floor and the bottom of the cushion frame.

In order to conceal the components of said height adjusting assembly and, if provided, of said sliding assembly, as well as to conceal other metallic components provided underneath the seat cushion, the vehicle seat according to the invention, on at least one side thereof (namely the outer side, i.e. the side oriented towards the vehicle door), includes:
a rigid shielding element, made of rigid plastic material or the like and extending along a lower edge of the side wall of the seat cushion; and
a soft covering element, made of fabric, leather or similar material, which is integral with or fastened to the cushion cover, preferably at the lower edge of the side wall of the seat cushion, and extends downwardly between said seat cushion and said rigid shielding element.

Thanks to the combination of said rigid shielding element and soft covering element, the height adjusting assembly and, if provided, the sliding assembly, as well as any other metallic components provided underneath the seat cushion, are effectively concealed from sight.

More particularly, the metallic components of said height adjusting assembly are concealed from sight for any position of the seat cushion: when the seat cushion is in its lowermost position, said metallic components are concealed by the rigid shielding element; when the seat cushion is raised and moves towards its uppermost position, a clearance is formed between the bottom of the seat cushion and the upper edge of the rigid shielding element, but such clearance is covered by the soft covering element, so that said metallic components of the height adjusting assembly remain concealed to an observer.

Therefore, the invention provides a simple and inexpensive, yet effective solution to the technical problem set forth above.

Thanks to the invention, a rigid shielding element having a reduced height can be advantageously used.

Moreover, thanks to the invention the drawbacks related to solutions employing bellows or similar foldable elements can be advantageously avoided.

The invention can be advantageously implemented in existing vehicle seats with limited efforts and costs.

It is evident that a combination of a rigid shielding element and a soft covering element may be employed on both sides (i.e. outer side and inner side) of the seat cushion of a vehicle seat.

According to an embodiment of the invention, the soft covering element is integral with the cushion cover.

According to an alternative, preferred embodiment of the invention, the soft covering element is separate from the cushion cover and it is fastened (e.g. sewn) to the cushion cover at its upper edge.

According to the invention, the lower edge of said soft covering element is fastened to an edge of one or more elastic strips, the opposite edge of which is fastened to the rigid shielding element or to another element which is fixedly fastened to said rigid shielding element (i.e. which does not move relative to said rigid shielding element when the seat cushion moves).

Such elastic strip(s) allow(s) to keep the soft covering element always in a tensioned state, especially when the seat cushion is moved towards its uppermost position, thus ensuring that it effectively covers the clearance between the bottom of said seat cushion and the rigid shielding element.

Furthermore, the provision of such elastic strip(s) allows to avoid folding and/or wrapping of the soft covering element when the seat cushion is at its lowermost position, which folding and/or wrapping could create malfunctioning when the seat cushion has to be moved towards its uppermost position.

Moreover, the provision of such elastic strip(s) avoids that a free end of the covering element becomes jammed in the components of the height adjusting assembly and/or of the sliding assembly arranged below the seat cushion during displacements of said seat cushion.

According to an embodiment of the invention, the covering element has a substantially rectangular shape.

According to an alternative embodiment of the invention, the covering element can be suitably shaped in order to cover particularly bulky components of the height adjusting assembly and/or of the sliding assembly, such as for instance a pumping module of the height adjusting assembly.

In a further alternative embodiment of the invention, in order to cover particularly bulky components of the height adjusting assembly and/or of the sliding assembly, such as for instance a pumping module of the height adjusting assembly, the rigid shielding element is provided with a suitably shaped recess and an elastic cover is mounted to the edge of said recess.

According to this embodiment of the invention, when the pumping module of the height adjusting assembly (or another bulky component) is raised as the seat cushion moves from its lowermost position towards its uppermost position, the elastic cover becomes deformed so as to conceal said recess of the shielding element when the latter receives such pumping module.

This alternative embodiment of the invention also allows to arrange the rigid shielding element closer to the side wall of the seat cushion.

### Brief Description of Drawings

Further features and advantages of the invention will become more evident from the detailed description of a preferred embodiment thereof, given by way of non limiting example, with reference to the attached drawing, in which:
**Fig.1**

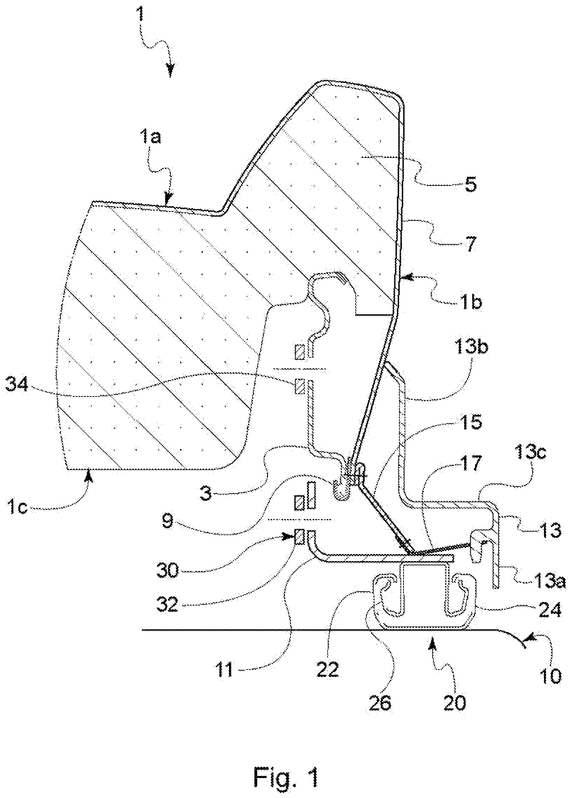

   Figure 1 is a partial sectional view of the seat cushion of a vehicle seat according to the invention, shown in its lowermost position;
**Fig.2**

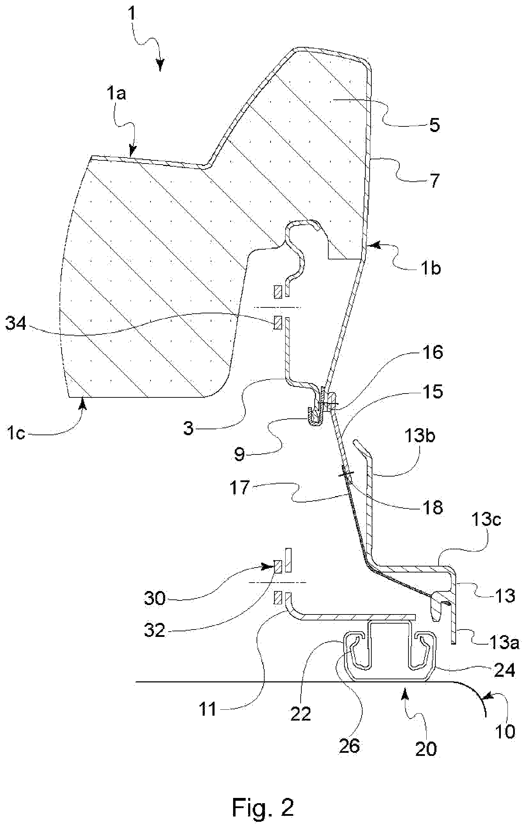

   Figure 2 is a partial sectional view of the seat cushion of a vehicle seat according to the invention, shown in its uppermost position;
**Fig.3**

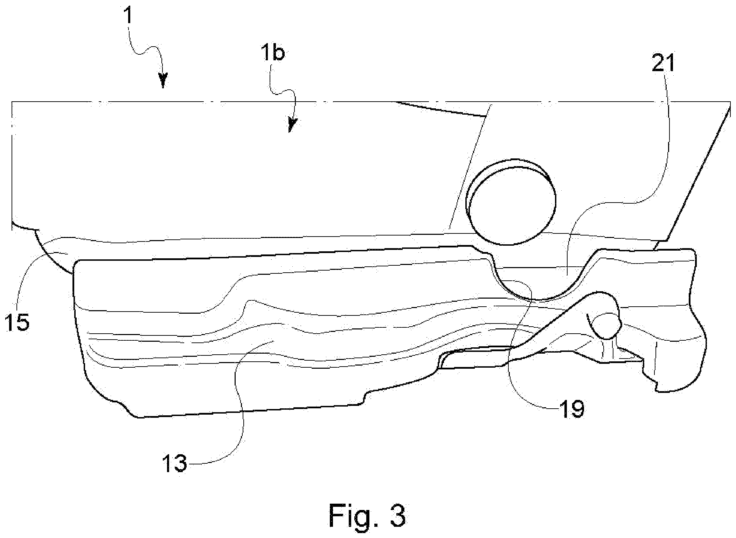

   Figure 3 is a partial side view of the seat cushion of a vehicle seat according to a constructional variant of the invention.

### Description of Embodiments

With reference to Figures 1 and 2, the seat cushion 1 of a vehicle seat according to the invention is partially shown. Namely the outer portion (i.e. the portion closer to the corresponding vehicle door) of the seat cushion 1 is shown in Figures 1 and 2.

In a per se known manner, the seat cushion 1 is formed by a cushion frame 3, a cushion foam member 5 mounted to the cushion frame 3, and a cushion cover 7 stretched over the cushion foam member 5 and fastened to the lower edge of the cushion frame 3.

The seat cushion 1 comprises a top wall 1a, defining a seating surface, a bottom wall 1c, and a pair of opposite side walls 1b as well as a pair of opposite end walls (not visible in the figures), which extend from the top wall la to the bottom wall lc of the seat cushion.

As can be seen in the figures, the cushion cover 7 is usually stretched over both the top wall la and the side walls 1b of the seat cushion 1 and it is fastened to the cushion frame 3 at the lower edge of said side walls 1b, preferably with the interposition of a plastic profile 9 fitted on the lower edge of said cushion frame 3.

The seat cushion 1 is mounted to the vehicle floor 10.

More particularly, the seat cushion 1 is mounted to the vehicle floor with the interposition of a sliding assembly 20 and of a height adjusting assembly 30, which are at least partially arranged below the bottom wall of said seat cushion.

The sliding assembly 20 includes a pair of parallel tracks 22 (only one of which is shown in Figures 1 and 2), each comprising a lower rail 24 fastened to the vehicle floor 10 and an upper rail 26 fastened to a riser 11 which is connected to the cushion frame 3, said upper rail 26 being selectively slidable relative to said lower rail 24.

The height adjusting assembly 30 is provided between the riser 11 and the cushion frame 3.

Such height adjusting assembly 30 is not shown in detail in Figures 1 and 2. In general, it includes a mechanical link comprising a first connecting portion 32 pivotally fastened to the riser 11, and a second connecting portion 34 pivotally fastened to the cushion frame 3, and a mechanical or electric device for varying the distance between said first and second connecting portions 32, 34 of the mechanical link in the vertical direction (i.e. in the direction perpendicular to the vehicle floor).

Figure 1 shows the seat cushion 1 in its lowermost position, i.e. when the distance between said first and second connecting portions 32, 34 of the mechanical link in the vertical direction is at its minimum value, while Figure 2 shows the seat cushion 1 in its uppermost position, i.e. when the distance between said first and second connecting portions 32, 34 of the mechanical link in the vertical direction is at its maximum.

It is evident that both the sliding assembly 20 and the height adjusting assembly 30 comprise several metallic components.

It is also evident that such metallic components would impair the overall appearance of the vehicle seat if they were strikingly visible, especially to an observer looking at the vehicle seat from the outside of the vehicle when the vehicle door is open.

According to the invention, in order to conceal the metallic components of said sliding assembly 20 and of said height adjusting assembly 30, as well as other metallic components provided underneath the seat cushion (such as, for instance, the cushion frame 3, the riser 11, and so on), the vehicle seat, at least on a side thereof (namely the outer side, i.e. the side oriented towards the vehicle door), is provided with:
a rigid shielding element 13 extending along the lower edge of the side wall 1b of the seat cushion 1; and
a soft covering element 15, which is fastened to the cushion cover 7, preferably at the lower edge of said side wall 1b of said seat cushion, and extends downwardly between said side wall of said seat cushion and said rigid shielding element 13.

The rigid shielding element 13 is preferably made of a suitable rigid plastic material.

The rigid shielding element 13 is advantageously shaped so as to conceal the components of the sliding assembly 20, while being, at the same time, as close as possible to the side wall 1b of the seat cushion.

Accordingly, in the shown embodiment such rigid shielding element 13 comprises a lower portion 13a, which is arranged farther from the seat cushion 1 for concealing the track 22 of the sliding assembly, and an upper portion 13b which is arranged closer to the seat cushion 1, said lower and upper portions 13a, 13b of the shielding element being joined to each other by a connecting portion 13c of said shielding element.

Nevertheless, it is evident that the rigid shielding element 13 could also have a different profile.

The soft covering element 15 is preferably made of a suitable fabric, most preferably of the same fabric of the cushion cover 7.

In the shown embodiment, the soft covering element 15 is a separate element with respect to the cushion cover 7 and an upper edge of said covering element 15 is fastened to said cushion cover, namely at the lower edge of the side wall 1b of the seat cushion.

The soft covering element 15 is preferably sewn to the cushion cover 7, namely by means of a seam 16.

However, in an alternative embodiment the soft covering element 15 could be integral with said cushion cover 7 and made as a prolongation of said cushion cover.

In such embodiment, too, the cushion cover 7 would be fastened to the lower edge of the cushion frame 3 in order to be stretched over the cushion foam member 5.

As clearly shown in the Figures:
when the seat cushion 1 is in its lowermost position (Figure 1), the sliding assembly 20 and the height adjusting assembly 30 are entirely behind the rigid shielding element 13, so that said shielding element 13 is sufficient for concealing the components of said sliding assembly 20 and height adjusting assembly 30;
when the seat cushion 1 is in its uppermost position (Figure 2), at least part of the components of the height adjusting assembly 30 would be visible through a clearance that is formed between said shielding element 13 and the seat cushion 1; however, the soft covering element 15 extends over such clearance, thus completely concealing the components of said height adjusting assembly 30.

Therefore, thanks to the invention, the sliding assembly 20 and the height adjusting assembly 30 (more particularly the metallic components of said assemblies), as well as other metallic components provided underneath the seat cushion 1, are concealed from sight for any position of the seat cushion, even if a rigid shielding element 13 having a reduced height is used.

It is evident that a further rigid shielding element and a further soft covering element, identical to the rigid shielding element 13 and to the soft covering element 15, respectively, could also be provided at the opposite side (i.e. the inner side) of the seat cushion 1, not shown in the figures.

According to the invention, as shown in Figures 1 and 2, the lower edge of said soft covering element 15 is fastened (e.g. sewn by a seam 18) to a first edge of one or more elastic strips 17, the opposite edge of which is fastened to the rigid shielding element 13.

By way of example, "L"-shaped protruding fingers can be provided in the rigid shielding element 13 and the elastic strip(s) 17 can be provided with eyelets that are fitted onto said fingers of the rigid shielding element. Said elastic strip(s) 17 allow(s) to keep the soft covering element 15 always in a tensioned state, especially when the seat cushion 1 is moved towards its uppermost position, thus ensuring that it effectively covers the clearance between the rigid shielding element and the bottom of the seat cushion.

Moreover, as clearly visible in Figure 2, said elastic strip(s) 17 keep(s) the soft covering element 15 as close as possible to the rigid shielding element 13, thus minimizing the width of the gap between said covering element and the upper edge of said shielding element, through which gap dust and dirt can penetrate and accumulate.

Furthermore, thanks to said elastic strip(s) 17, the risk of folding and/or wrapping of the soft covering element 15 when the seat cushion is at its lowermost position, as well as the risk that the lower end of said covering element 15 becomes jammed in the components of the height adjusting assembly 30 and/or of the sliding assembly 20 are avoided.

According to a first possible variant, a single elastic strip 17 is provided, having an extension substantially equal to the extension of the soft covering element 15.

According to a second possible variant, a plurality of narrow elastic strips 17 are provided, which strips are discretely arranged along the extension of the soft covering element 15. Preferably, such elastic strips are equally spaced along the extension of the soft covering element 15.

Although in the shown embodiment the elastic strip(s) 17 is/are fastened to the rigid shielding element 13, in alternative embodiments of the invention it can be envisaged that such elastic strip(s) 17 is/are fastened to some other component which, in turn, is fixedly fastened to said rigid shielding element (i.e. which does not move relative to said rigid shielding element when the seat cushion moves), such as the riser 11, or the upper rail 26 of the track 22 of the sliding assembly 20.

From the above description, the advantages of the invention will be evident to the person skilled in the art :
there is no risk of deterioration of the soft covering element 15 over time;
there is no need for providing specific, additional room for said soft covering element 15; therefore, it can be envisaged to easily implement the invention in existing vehicle seats, too;
both the manufacturing and the assembling of the rigid shielding element 13 and of the soft covering element 15 are simple and inexpensive;
the soft covering element 15 can be made of any shape adapted to effectively cover and conceal the height adjusting assembly 30 (namely, the metallic components of said assembly).

With reference to the last point, in a particularly simple embodiment of the invention, the soft covering element 15 has a substantially rectangular shape.

However, in alternative embodiments of the invention, it can be envisaged that the soft covering element is suitably shaped in order to effectively cover all the components of the height adjusting assembly 30, namely any possible bulky components of said assembly, as well as any other metallic components of the seat cushion.

By way of example, in case the height adjusting assembly 30 includes a pumping module, the covering element can be suitably shaped in order to effectively cover and conceal said pumping module of said height adjusting assembly.

In Figure 3, a constructional variant of the vehicle seat according to the invention is schematically shown, which variant allows to conceal bulky components of the height adjusting assembly without the need for providing a soft covering element having a complex shape.

Figure 3 refers, by way of example, to the case in which the height adjusting assembly includes a pumping module.

As shown in Figure 3, according to this variant, at the position of the pumping module (schematically shown by a cylinder in Figure 3) of the height adjusting assembly a recess 19 is provided in an upper portion of the rigid shielding element 13 and an elastic cover 21 is mounted to the edge of said recess 19.

Accordingly, when the pumping module of the height adjusting assembly is lowered as the seat cushion 1 moves from its uppermost position towards its lowermost position, the elastic cover 21 becomes deformed so as to accommodate such pumping module.

Similar arrangements may be envisaged for any other bulky components of the height adjusting assembly.

This variant also allows to advantageously arrange the rigid shielding element 13 closer to the side wall 1b of the seat cushion 1.

The above description of a preferred embodiment of the invention has been given merely by way of example and several variants and modifications within the reach of the person skilled in the art can be envisaged, without departing from the scope of the invention as defined by the appended claims.

## Claims

1. Vehicle seat, comprising a seat cushion (1) which comprises a cushion frame (3), a cushion foam member (5) mounted to said cushion frame and a cushion cover (7) stretched over said cushion foam member and fastened to said cushion frame (3), wherein a top wall (1a), a bottom wall (1c), and a pair of opposite side walls (1b) as well as a pair of opposite end walls are defined in said seat cushion (1), wherein said cushion cover (7) is stretched over said top wall (1a) and said side walls (1b) of said seat cushion and it is fastened to said cushion frame (3) at the lower edge of said side walls (1b), wherein said vehicle seat, at least on one of its sides, is provided with:
a rigid shielding element (13) extending along the lower edge of the corresponding side wall (1b) of said seat cushion (1); and
a soft covering element (15), which is integral with or fastened to said cushion cover (7) and extends downwardly between said side wall (1b) of said seat cushion (1) and said rigid shielding element (13),
**characterized in that** the lower edge of said soft covering element (15) is fastened to a first edge of one or more elastic strips (17), a second, opposite edge of which is fastened to said rigid shielding element (13) or to a component that is fixed relative to said rigid shielding element.

2. Vehicle seat according to claim 1, **characterized in that** said vehicle seat, on both of its opposite sides, is provided with:
a rigid shielding element (13) extending along the lower edge of the corresponding side wall (1b) of said seat cushion (1);
a soft covering element (15), which is integral with or fastened to said cushion cover (7) and extends downwardly between said side wall (1b) of said seat cushion (1) and said rigid shielding element (13).

3. Vehicle seat according to claim 1 or 2, **characterized in that** the upper edge of said soft covering element (15) is fastened to said cushion cover (7) at the lower edge of said side wall (1b) of said seat cushion (1).

4. Vehicle seat according to claim 1, **characterized in that** a single elastic strip (17) is provided, having an extension substantially equal to the extension of said soft covering element (15).

5. Vehicle seat according to claim 1, **characterized in that** a plurality of elastic strips (17) is provided, which elastic strips are discretely arranged along the extension of said soft covering element (15), and preferably equally spaced along the extension of said soft covering element 15.

6. Vehicle seat according to claim 1 or 2, **characterized in** a recess (19) is provided in the upper portion of said rigid shielding element (13) and an elastic cover (21) is mounted to the edge of said recess (19).

7. Vehicle seat according to any of the preceding claims, **characterized in that** said rigid shielding element (13) is made of a rigid plastic material.

8. Vehicle seat according to any of the preceding claims, **characterized in that** said soft covering element (15) is made of fabric, leather or similar material.

9. Vehicle seat according to any of the preceding claims, **characterized in that** said vehicle seat is provided with a height adjusting assembly (30) and/or with a sliding assembly (20), which is/are at least partially arranged below said bottom wall (1c) of said seat cushion (1).

## Patentansprüche

1. Fahrzeugsitz mit einem Sitzkissen (1), das einen Kissenrahmen (3), ein Kissenschaumteil (5), das an dem Kissenrahmen angebracht ist, und einen Kissenbezug (7), der über das Kissenschaumteil gezogen und an dem Kissenrahmen (3) befestigt ist, aufweist, wobei eine obere Wand (1a), eine untere Wand (1c) und ein Paar von gegenüberliegenden Seitenwänden (1b) sowie ein Paar von gegenüberliegenden Endwänden von dem Sitzkissen (1) definiert werden, wobei der Kissenbezug (7) über die obere Wand (1a) und die Seitenwände (1b) des Sitzkissens gezogen und an dem Kissenrahmen (3) an dem unteren Ende der Seitenwände (1b) befestigt ist, wobei der Fahrzeugsitz zumindest an einer seiner Seiten versehen ist mit:
einem starren Abschirmelement (13) versehen ist, das sich entlang des unteren Randes der entsprechenden Seitenwand (1b) des Sitzkissens (1) erstreckt, und ein weiches Abdeckelement (15), das integral Kissenbezug (7) ausgebildet oder an ihm befestigt ist und sich zwischen der Seitenwand (1b) des Sitzkissens (1) und dem starren Abschirmelement (13) nach unten erstreckt,
**dadurch gekennzeichnet, dass** der untere Rand des weichen Abdeckelements (15) an einem ersten Rand von einem oder mehreren elastischen Streifen (17) befestigt ist, ein zweiter gegenüberliegender Rand von ihm an dem starren Abschirmelement (13) oder an einer Komponente, die relativ zu dem starren Abschirmelement unbeweglich ist, befestigt ist.

2. Fahrzeugsitz nach Anspruch 1, **dadurch gekennzeichnet, dass** der Fahrzeugsitz auf beiden gegenüberliegenden Seiten versehen ist mit:
einem starren Abschirmelement (13), das sich entlang des unteren Randes der entsprechenden Seitenwand (1b) des Sitzkissens (1) erstreckt,
einem weichen Abdeckelement (15) das integral mit dem Kissenbezug (7) ausgebildet oder an ihm befestigt ist und sich zwischen der Seitenwand (1b) des Sitzkissens (1) und dem starren Abschirmelement (13) nach unten erstreckt.

3. Fahrzeugsitz nach Anspruch 1 oder 2, **dadurch gekennzeichnet, dass** der obere Rand des weichen Abdeckelements (15) an dem Kissenbezug (7) an dem unteren Rand der Seitenwand (1b) des Sitzkissens (1) befestigt ist.

4. Fahrzeugsitz nach Anspruch 1, **dadurch gekennzeichnet, dass** ein einziger elastischer Streifen (17) vorgesehen ist, der eine Ausdehnung hat, die im Wesentlichen der Ausdehnung des weichen Abdeckelements (15) entspricht.

5. Fahrzeugsitz nach Anspruch 1, **dadurch gekennzeichnet, dass** mehrere elastische Streifen (17) vorgesehen sind, wobei die elastischen Streifen einzeln entlang der Ausdehnung des weichen Abdeckelements (15) angeordnet sind, bevorzugt in gleichem Abstand, entlang der Ausdehnung des weichen Abdeckelements (15).

6. Fahrzeugsitz nach Anspruch 1 oder 2, **dadurch gekennzeichnet, dass** eine Aussparung (19) in dem oberen Abschnitt des starren Abschirmelements (13) vorgesehen ist, und eine elastische Abdeckung (21) an dem Rand der Aussparung (19) angebracht ist.

7. Fahrzeugsitz nach einem der vorstehenden Ansprüche, **dadurch gekennzeichnet, dass** das starre Abschirmelement (13) aus einem starren Plastikmaterial ist.

8. Fahrzeugsitz nach einem der vorstehenden Ansprüche, **dadurch gekennzeichnet, dass** das weiche Abdeckelement (15) aus Gewebe, Leder oder ähnlichem Material ist.

9. Fahrzeugsitz nach einem der vorstehenden Ansprüche, **dadurch gekennzeichnet, dass** der Fahrzeugsitz mit einer Höhenanpassungsbaugruppe (30) und/oder mit einer Verschiebebaugruppe (20) versehen ist, die zumindest teilweise unter der unteren Wand (1c) des Sitzkissens (1) angeordnet ist/sind.

## Revendications

1. Siège de véhicule comportant un coussin de siège (1) qui comprend une armature de coussin (3), un élément en mousse de coussin (5) monté sur cette armature de coussin et une coiffe de coussin (7) tendue sur cet élément en mousse de coussin et fixée à cette armature de coussin (3), une paroi supérieure (1a), une paroi inférieure (1c) et une paire de parois latérales opposées (1b) ainsi qu'une paire de parois d'extrémité opposées étant définies dans ce coussin de siège (1), cette coiffe de coussin (7) étant tendue sur cette paroi supérieure (1a) et ces parois latérales (1b) de ce coussin de siège et étant fixée à cette armature de coussin (3) sur le bord inférieur de ces parois latérales (1b), dans lequel ce siège de véhicule, au moins sur l'un de ses côtés, est pourvu de:
- un élément d'habillage rigide (13) s'étendant le long du bord inférieur de la paroi latérale (1b) correspondante de ce coussin de siège (1); et
- un élément de couverture souple (15), qui est intégré ou fixé à cette coiffe de coussin (7) et s'étend vers le bas entre cette paroi latérale (1b) de ce coussin de siège (1) et cet élément d'habillage rigide (13),
**caractérisé en ce que** le bord inférieur de cet élément de couverture souple (15) est fixé sur un premier bord d'une ou plusieurs bande(s) élastique(s) (17), dont un deuxième bord opposé est fixé sur cet élément d'habillage rigide (13) ou sur un composant qui est immobile par rapport à cet élément d'habillage rigide

2. Siège de véhicule selon la revendication 1, **caractérisé en ce que** ce siège de véhicule, sur ses deux côtés opposés, est pourvu de:
- un élément de couverture rigide (13) s'étendant le long du bord inférieur de la paroi latérale (1b) correspondante de ce coussin de siège (1);
- un élément de couverture souple (15), qui est intégré ou fixé à cette coiffe de coussin (7) et s'étend vers le bas entre cette paroi latérale (1b) de ce coussin de siège (1) et cet élément de couverture rigide (13).

3. Siège de véhicule selon la revendication 1 ou 2, **caractérisé en ce que** le bord supérieur de cet élément de couverture souple (15) est fixé sur cette coiffe de coussin (7) en correspondance du bord inférieur de cette paroi latérale (1b) de ce coussin de siège (1).

4. Siège de véhicule selon la revendication 1, **caractérisé en ce qu'**une seule bande élastique (17) est prévue, cette bande élastique ayant une extension sensiblement égale à l'extension de cet élément de couverture souple (15).

5. Siège de véhicule selon la revendication 1, **caractérisé en ce qu'**une pluralité de bandes élastiques (17) est prévue, ces bandes élastiques étant disposées de manière discrète le long du prolongement de cet élément de couverture souple (15), de préférence également espacées le long du prolongement de cet élément de couverture souple (15).

6. Siège de véhicule selon la revendication 1 ou 2, **caractérisé en ce qu'**un évidement (19) est prévu dans la partie supérieure de cet élément d'habillage rigide (13) et qu'une couverture élastique (21) est montée sur le bord de cet évidement (19).

7. Siège de véhicule selon l'une quelconque des revendications précédentes, **caractérisé en ce que** cet élément d'habillage rigide (13) est réalisé en un matériau plastique rigide.

8. Siège de véhicule selon l'une quelconque des revendications précédentes, **caractérisé en ce que** cet élément de couverture souple (15) est réalisé en tissu, cuir ou matériau similaire.

9. Siège de véhicule selon l'une quelconque des revendications précédentes, **caractérisé en ce que** ce siège de véhicule est pourvu d'un ensemble de réglage en hauteur (30) et/ou d'un ensemble de glissement (20) qui sont agencé(s) au moins partiellement au-dessous de cette paroi inférieure (1c) de ce coussin de siège (1).
